# EUROPÄISCHE PATENTSCHRIFT

(11) **EP 1 644 206 B1**
(45) Veröffentlichungstag und Bekanntmachung des Hinweises auf die Patenterteilung: **04.07.2007**
(21) Anmeldenummer: 04741610.2
(22) Anmeldetag: 19.05.2004
(51) Int. Cl.: B60C 23/04

(54) **VERFAHREN UND EINRICHTUNG ZUR LOKALISIERUNG DER POSITION WENIGSTENS ZWEIER SENDEEINHEITEN, INSBESONDERE FÜR DAS ÜBERWACHEN MINDESTENS EINES PARAMETERS FÜR MEHRERE FAHRZEUGRÄDER EINES KFZ**
METHOD AND DEVICE FOR LOCALISING THE POSITION OF AT LEAST TWO EMISSION UNITS, ESPECIALLY FOR MONITORING AT LEAST ONE PARAMETER FOR A PLURALITY OF WHEELS PERTAINING TO A MOTOR VEHICLE
PROCEDE ET DISPOSITIF POUR LOCALISER LA POSITION D'AU MOINS DEUX UNITES D'EMISSION, DESTINES EN PARTICULIER A LA SURVEILLANCE D'AU MOINS UN PARAMETRE POUR PLUSIEURS ROUES D'UN VEHICULE AUTOMOBILE

(30) Priorität: 10.07.2003 DE 10331314
(43) Veröffentlichungstag der Anmeldung: 12.04.2006
(73) Patentinhaber: SIEMENS AKTIENGESELLSCHAFT, 80333 München (DE)
(72) Erfinder: FISCHER, Frank, 93057 Regensburg (DE); SPOTKA, Jürgen, 93197 Zeitlarn (DE)
(86) Internationale Anmeldenummer: PCT/EP2004/050865
(87) Internationale Veröffentlichungsnummer: WO 2005/005172

(56) Entgegenhaltungen:
- EP-A- 0 931 679
- DE-A- 10 135 936
- DE-A- 19 608 479

## Beschreibung

Die Erfindung betrifft Verfahren und eine Einrichtung zur Lokalisierung der Position wenigstens zweier Sendeeinheiten, insbesondere für das Überwachen mindestens eines Parameters für mehrere Fahrzeugräder eines KFZ.

Das Überwachen von Parametern eines Fahrzeugrades, bspw. des Reifendrucks oder der Reifentemperatur, spielt für die Sicherheit des Fahrzeugs bzw. des Fahrzeugführers eine entscheidende Rolle. Um das manuelle Überprüfen derartiger Parameter entbehrlich zu machen, wurden Einrichtungen entwickelt, mit welchen es möglich ist, wichtige Parameter von Fahrzeugrädern selbsttätig zu erfassen und bspw. mittels entsprechender Anzeigeeinrichtungen im Armaturenbrett anzuzeigen. Da in der Regel gewünscht ist, nicht nur die Parameter anzuzeigen, sondern auch eine eindeutige Zuordnung zwischen den angezeigten Parametern und der Position des betreffenden Rades anzugeben, ist es erforderlich, eine derartige Einrichtung so zu gestalten, dass diese Zuordnung auch nach dem Wechsel eines Rades erhalten bleibt bzw. neu initialisierbar ist.

Hierzu ist es bekannt, jede Detektoreinrichtung, die jeweils an einem Rad angeordnet ist, einer Empfangseinheit zuzuordnen, die in der Nähe der betreffenden Radposition vorgesehen ist. Auf diese Weise ist es möglich, an Hand der Intensität der von einer Empfangseinheit empfangenen Signale das Signal der jeweils benachbarten Detektoreinrichtung festzustellen, indem das Signal mit der größten Intensität ausgewählt wird. Hierbei wird davon ausgegangen, dass die Detektoreinrichtungen der Räder eines Fahrzeugs mit im Wesentlichen der selben Sendeleistung senden, so dass das Signal des jeweils unmittelbar benachbarten Rades bzw. der benachbarten Detektoreinrichtung am Empfangsort die größte Signalintensität aufweist.

Nachteilig bei einer derartigen Einrichtung ist jedoch, dass für jedes Rad eine Empfangseinrichtung erforderlich ist, deren empfangenes Signal dann leitungsgebunden zu einer zentralen Auswerte- und Steuereinheit oder direkt zu einer Anzeigeeinheit geführt werden muss.

Aus der EP-A-0 806 306 ist ein Luftdruck-Kontrollsystem bekannt, bei dem die Zuordnung der Radpositionen zu den Luftdruck-Kontrollvorrichtungen, die an den Rädern angeordnet sind, dadurch ermöglicht wird, dass mit den Luftdruck-Kontrollvorrichtungen und mit jeweils einer weiteren, den Rädern zugeordneten Messvorrichtung, ein weiterer Parameter für jedes Rad erfasst wird. Hierbei kann es sich bspw. um die Raddrehzahl handeln. Die Luftdruck-Kontrollvorrichtungen übermitteln somit nicht nur Messwerte für den Luftdruck sondern auch Messwerte für den weiteren Parameter an eine Zentraleinheit. Da für den selben weiteren Parameter auch Messwerte von den weiteren Messvorrichtungen an die Zentraleinheit übermittelt werden, kann die Zentraleinheit durch einen Vergleich der Messwerte für den weiteren Parameter eine Zuordnung einer Luftdruck-Kontrollvorrichtung zu einer Radposition vornehmen, wenn der von der betreffenden Luftdruck-Kontrollvorrichtung für den weiteren Parameter gelieferte Messwert genügend genau mit dem betreffenden Messwert des Parameters einer weiteren Messvorrichtung übereinstimmt. Denn die weiteren Messvorrichtungen sind ortsfest am Fahrzeug (nicht am Rad) angeordnet und bleiben damit dauernd einer bestimmten Radposition zugeordnet.

Nachteilig bei dieser Einrichtung ist der zusätzliche Aufwand für die beiden Sensoren zur Erfassung des weiteren Parameters. Selbst falls der weitere Parameter mit demjenigen Sensor erfassbar ist, der ohnehin am Rad zur Erfassung des Luftdrucks vorgesehen ist, ist pro Rad ein weiterer, ortfest am Fahrzeug vorgesehener Sensor zur Erfassung des weiteren Parameters nötig.

Schließlich ist aus der EP-A-0 931 679 und der DE 10135936 A1 ein Verfahren zur Zuordnung der Radposition eines KfZ bekannt, bei dem die Sendesignale von den Rädern zugeordneten Sendeeinheiten zu einer zentralen Empfangs- und Auswerteeinheit übertragen werden und bei dem die unterschiedlichen charakteristischen Einflüsse der einzelnen Übertragungswege bei rotierenden Rädern auf das jeweilige Empfangssignal zur Zuordnung der Signale zu den Radpositionen ausgeweitet werden. Hierzu wird die Einhüllende des durch die zeitvarianten Änderungen der Übertragungseigenschaften amplitudenmodulierten Empfangssignals mit gespeicherten Signaturen verglichen. Nachteilig hierbei ist jedoch das relativ aufwändige Erfassen und Auswerten der Einhüllenden. Dies bedingt einen hohen Speicher- und Rechenaufwand.

Der Erfindung liegt daher die Aufgabe zu Grunde, ein Verfahren und eine Einrichtung zur Lokalisierung der Position wenigstens zweier Sendeeinheiten, insbesondere für das Überwachen mindestens eines Parameters für mehrere Fahrzeugräder eines KFZ, zu schaffen, wobei die Lokalisierung auf einfache Weise und mit der erforderlichen Sicherheit möglich ist, wobei gleichzeitig ein möglichst geringer Hardwareaufwand angestrebt wird.

Die Erfindung löst diese Aufgabe mit den Merkmalen des Patentanspruchs 1 bzw. 8.

Die Erfindung geht von der Erkenntnis aus, dass bei einer Datenübertragung mittels eines vorzugsweise phasen- oder frequenzmodulierten Signals die am Empfangsort einer zentralen Auswerte- und Steuereinheit auftretende Signalleistung von den Eigenschaften des Übertragungswegs zwischen der an einem Rad angeordneten Detektoreinheit und der Auswerte- und Steuereinheit beeinflusst wird. Die Eigenschaften des Übertragungsweges werden dabei zum einen von der Winkelstellung des Rades und damit der Position der Detektoreinheit und zum anderen durch die das von der betreffenden Winkelstellung aus gesendete Signal beeinflussenden Teile bzw. Bereiche des Fahrzeugs bestimmt. Es hat sich in der Praxis herausgestellt, dass die Übertragungswege bei einer Rotation der Räder an den verschiedenen Radpositionen jeweils unterschiedlich und gleichzeitig charakteristisch für die Radpositionen sind.

Erfindungsgemäß wird daher vorzugsweise die mittlere Signalleistung des Empfangssignals von der Auswerte- und Steuereinheit ausgewertet, um die Zuordnung eines Empfangssignals bzw. der betreffenden Sendeeinheit zu einer Radposition oder Achsenposition zu ermöglichen.

Ganz allgemein gesprochen wird ein Teil N der Sendeeinheiten einer ersten Sendergruppe und der andere Teil M der Sendeeinheiten einer zweiten Sendergruppe zugeordnet, wobei jeder Sendergruppe ein örtlicher Bereich, beispielsweise der Positionsbereich "Hinterachse" oder der Positionsbereich "Vorderachse" zugeordnet ist. Dieses Bilden von Sendergruppen kann entweder aus Gründen einer einfacheren Auswertung vorgenommen werden oder deshalb, weil die Übertragungswege die Sendesignale doch nicht so unterschiedlich beeinflussen, dass diese am Ort der Empfangsantenne der Empfangseinheit eine ausreichend unterschiedliche (über einen langen Zeitraum gemittelte) mittlere Leistung aufweisen und demzufolge allein durch die einfache Auswertung der mittleren Leistung kaum oder jedenfalls nicht mit der erforderlichen Sicherheit zu unterscheiden sind.

Selbstverständlich können mit dem erfindungsgemäße Verfahren jedoch auch einzelne Sendeeinheiten lokalisiert werden. Insbesondere kann das Verfahren des Aufteilens der Sendeeinheiten in zwei Gruppen mehrfach nacheinander angewendet werden. Z.B. kann nach dem Zuordnen der Sendeeinheiten zu den beiden Sendergruppen das Verfahren wiederum auf jede der beiden Gruppen angewendet werden, also jede Gruppe ihrerseits wieder in zwei Teilgruppen aufgeteilt werden.

Erfindungsgemäß werden die N Sendeeinheiten der insgesamt N+M Sendeeinheiten mit den jeweils N größten Mittelwerten des Empfangssignals der ersten Sendergruppe und damit dem betreffenden örtlichen Bereich zugeordnet und die M Sendeeinheiten mit dem den jeweils M kleinsten Mittelwerten des Empfangssignals der zweiten Sendergruppe bzw. dem betreffenden örtlichen Bereich.

Als Maß für die Sicherheit der Zuordnung dient der minimale Abstand der mittleren Leistungen der Empfangssignale der beiden Sendergruppen; Mit anderen Worten: Es werden das in der Rangfolge der abnehmenden mittleren Leistungen an N-ter Stelle und das an (N+1)-ter Stelle stehende Empfangssignal ausgewertet. Als Maß für den Abstand kann beispielsweise die absolute Betragsdifferenz der Signale oder das Verhältnis der Signale ausgewertet werden. Ist der Abstand größer als ein vorgegebener Schwellenwert, so wird das Ergebnis der in der vorstehenden Art und Weise vorgenommenen Zuordnung als (mit ausreichender Sicherheit) zutreffend angesehen. Andernfalls wird wenigstens ein weiteres Entscheidungskriterium zur Zuordnung der Empfangssignale bzw. den betreffenden Sendeeinheiten zu den Sendergruppen bzw. deren örtlichen Bereichen und/oder ein weiteres Kriterium zur Prüfung der Sicherheit der korrekten Zuordnung, vorzugsweise unter Verwendung weiterer charakteristischer Größen der Empfangssignale, verwendet.

Nach einer Ausführungsform der Erfindung wird das Endergebnis der Zuordnung nur dann als korrekt erkannt, wenn alle Zuordnungsergebnisse unter Verwendung des einen oder der mehreren weiteren Entscheidungskriterien mit dem ersten Zuordnungsergebnis übereinstimmen, ggf. auch dann, wenn das erste und auch alle weiteren Entscheidungskriterien zur Prüfung der Sicherheit einer korrekten Zuordnung ein negatives Ergebnis liefern. Die Zuordnung kann auch dann als korrekt anerkannt werden, wenn auch die Anwendung des letzten Kriteriums zur Prüfung der Sicherheit der Zuordnung ergeben sollte, dass die Sicherheit der Zuordnung ungenügend ist. In diesem Fall kann infolge der Übereinstimmung der Zuordnungsergebnisse als solche von einer ausreichenden Sicherheit ausgegangen werden.

Andernfalls wird das Zuordnungsergebnis verworfen und ggf. ein Fehlersignal erzeugt.

Das Verfahren läuft also insgesamt wie folgt ab: Zunächst wird eine Zuordnung der Sendeeinheiten zu den Sendergruppen bzw. deren örtlichen Bereichen durch die Auswertung der Mittelwerte der Empfangssignale vorgenommen und die Sicherheit der Zuordnung durch die Anwendung des ersten Kriteriums zur Überprüfung der Sicherheit bewertet. Im Fall einer ausreichenden Sicherheit wird das Verfahren beendet. Andernfalls wird ein weiteres Kriterium zur Zuordnung der Sendeeinheiten angewendet und das Ergebnis durch ein weiteres Sicherheitskriterium überprüft. Handelt es sich hierbei um das letzte, für das konkrete Verfahren zur Verfügung stehende Kriterium, so wird bei Übereinstimmung der Zuordnungsergebnisse auch dann von einer korrekten Zuordnung ausgegangen, wenn das letzte Sicherheitskriterium ein negatives Ergebnis liefert, d.h. eine nicht ausreichende Sicherheit (bei der Anwendung des letzten Kriteriums zur Zuordnung) anzeigt. Stimmen die Zuordnungsergebnisse nicht überein, so wird das Verfahren mit einer Fehlermeldung abgebrochen und ggf. ein Fehlersignal erzeugt. Handelt es sich nicht um das letzte, für das konkrete Verfahren zur Verfügung stehende Kriterium, so wird bei einem negativen Ergebnis bei der Überprüfung der Sicherheit das nächste anzuwendende Kriterium herangezogen etc.

Bei der bevorzugten Ausführungsform des Verfahrens werden die Empfangssignale intermittierend abgetastet oder es werden intermittierende Sendesignale verwendet. Beispielsweise kann jede Sendeeinheit in vorbestimmten Abständen (z.B. alle 5 s) ihr Telegramm senden, das sowohl einen Identifikationscode als auch zu übertragende Informationen enthält. Das Telegramm kann aus mehreren Teilen bestehen, z.B. mehrere zeitlich kurze Teile, in denen tatsächlich ein Signal übertragen wird, welche jeweils durch eine Pause bestimmter zeitlicher Dauer getrennt sind.

Die einzelnen Telegrammteile, in denen eine Signalübertragung erfolgt, können so kurz sein, dass für diese jeweils ein diskreter Wert für den Mittelwert des betreffenden modulierten Signal erfasst werden kann, ohne eine allzu große integrie rende Wirkung hinsichtlich der zeitlichen Abhängigkeit des Signals von einer möglichen Änderung der Winkelstellung des betreffenden Rades zu erzeugen. Als weitere charakteristische Größe für die Empfangssignale kann dann die Anzahl dieser diskreten Empfangssignalwerte ermittelt werden, die größer bzw. kleiner ist als ein vorgegebener Entscheider-Schwellenwert, wobei vorzugsweise eine Mindestanzahl von solchen diskreten Empfangssignalwerten für jedes Empfangssignal erfasst wird und für jedes Empfangssignal die relative Häufigkeit der oberhalb bzw. unterhalb des Schwellenwertes liegenden Empfangssignalwerte bestimmt wird.

Die Zuordnung kann dann in der Weise erfolgen, dass diejenigen N Empfangssignale bzw. Sendeeinheiten der ersten Sendergruppe zugeordnet werden, für die sich die N größten relativen Häufigkeiten ergeben. Die Zuordnung zur zweiten Sendergruppe erfolgt für diejenigen M Empfangssignale bzw. Sendeeinheiten, für die sich die M kleinsten relativen Häufigkeiten ergeben.

Die Zuordnung kann dabei ganz allgemein durch das Erfassen des Identifikationscodes des betreffenden Empfangssignals und dessen Zuordnen zur betreffenden Sendergruppe erfolgen.

Als Test hinsichtlich der Sicherheit der Zuordnung unter Verwendung der ermittelten relativen Häufigkeitswerte kann die minimale Betragsdifferenz der relativen Häufigkeitswerte für alle Empfangssignale der ersten und zweiten Sendergruppe ermittelt (d.h. die Betragsdifferenz des minimalen relativen Häufigkeitswertes für ein Empfangssignal aus der ersten Sendergruppe und des maximalen relativen Häufigkeitswertes für ein Empfangssignal aus der zweiten Sendergruppe) und mit einem vorgegebenen weiteren Sicherheitsschwellenwert verglichen werden, wobei ein positives Testergebnis angenommen wird, wenn die minimale Betragsdifferenz größer ist als der weitere Sicherheitsschwellenwert und wobei ein negatives Testergebnis angenommen wird, wenn die minimale Betragsdifferenz kleiner ist als der weitere Sicherheitsschwellenwert.

Nach der bevorzugten Ausführungsform der Erfindung wird der Entscheider-Schwellenwert in Abhängigkeit von charakteristischen Parametern der betreffenden Empfangssignale bestimmt. Der Entscheider-Schwellenwert kann dabei beispielsweise abhängig von den erfassten Mittelwerten des kleinsten Empfangssignals der ersten Sendergruppe und des größten Empfangssignals der zweiten Sendergruppe ermittelt werden, vorzugsweise als relativer Abstand von einem der Mittelwerte dieser beiden Empfangssignale oder als Verhältnis in Bezug auf einen der Mittelwerte dieser beiden Empfangssignale.

Durch dieses Verfahren kann eine Drift in den mittleren Leistungen der Empfangssignale kompensiert werden. Dabei wird vorzugsweise in einem Ausgangszustand des Verfahrens für den Entscheider-Schwellenwert ein vorgegebener Startwert verwendet. Bei einem wiederholten Durchführen des Verfahrens kann dann jeweils der im vorangegangenen Zuordnungsvorgang neu bestimmte Entscheider-Schwellenwert im darauffolgenden Verfahren verwendet werden. Hierdurch ergibt sich der Vorteil einer geringen erforderlichen Rechenleistung und Speicherkapazität. Denn es muss für jedes Empfangssignal lediglich ein Zähler geführt werden, der die Anzahl der Werte oberhalb oder unterhalb des Entscheider-Schwellenwertes repräsentiert.

Spielt die Rechenleistung und Speicherkapazität keine Rolle, so können selbstverständlich auch alle diskreten Werte für die Empfangssignale gespeichert und im Rahmen einer entspre chenden Auswertung der optimale Entscheider-Schwellenwert bestimmt werden. Dieser kann dann auch für das laufende Zuordnungsverfahren verwendet werden.

Weitere Ausführungsformen des Verfahrens und der Einrichtung nach der Erfindung ergeben sich aus den Unteransprüchen.

Die Erfindung wird nachfolgend an Hand eines in der Zeichnung dargestellten Ausführungsbeispiels näher erläutert. In der Zeichnung zeigen
- Fig. 1: eine schematische Darstellung eines Fahrzeugs mit einer Einrichtung für das Überwachen wenigstens eines Parameters für mehrere Fahrzeugräder und
- Fig. 2: Diagramme mit beispielhaften fiktiven Verläufen von Empfangssignalen, abhängig von der Winkelposition des betreffenden Rades.

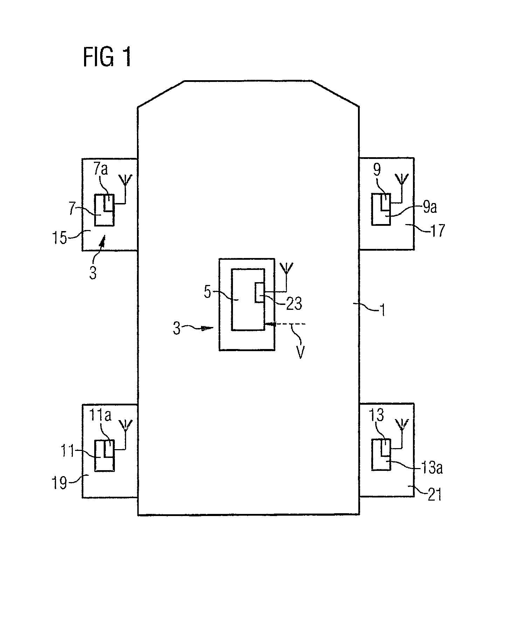

Das in Fig. 1 schematisch dargestellte Fahrzeug 1 weist eine Einrichtung 3 zur Überwachung mindestens eines Parameters für mehrere Räder des Fahrzeugs 1 auf, welche eine zentrale Auswerte- und Steuereinheit 5 und vier Detektoreinheiten 7, 9, 11, 13 umfasst. Die Einrichtung 3 umfasst bzw. dient gleichzeitig als Einrichtung zur Lokalisierung der Position von Sendeeinheiten. Jede der Detektoreinheiten 7, 9, 11, 13 ist einem der Räder 15, 17, 19, 21 des Fahrzeugs 1 zugeordnet bzw. an diesem und mit diesem rotierbar angeordnet.

Jede der Detektoreinrichtungen 7, 9, 11, 13 umfasst eine Sendeeinheit 7a, 9a, 11a, 13a. Jede der Sendeeinheiten 7a, 9a, 11a, 13a sendet zu vorbestimmten Zeiten ein kurzes Frequenz- oder phasenmoduliertes Signal, welches als Information eine für jede Detektoreinrichtung 7, 9, 11, 13 spezifische Kennung und ggf. einen Wert für den zu überwachenden Parameter des Rades umfasst. Letzteres ist jedoch im Zuordnungsmodus nicht erforderlich. Die spezifische Kennung und der Wert des Parameters sind vorzugsweise in Form digitaler Informationen bzw. in Form eines digitalen Signals realisiert, welches als Modulationssignal für das Trägersignal des Sendesignals verwendet wird.

Die von den Detektoreinheiten 7, 9, 11, 13 bzw. deren Sendeeinheiten 7a, 9a, 11a, 13a gesendeten Signale werden von der Auswerte- und Steuereinheit 5 mittels einer von dieser umfassten Empfangseinheit 23 empfangen. Die Empfangseinheit 23 demoduliert das Empfangssignal und ermöglicht der Auswerte- und Steuereinheit 5 somit die Auswertung der vorzugsweise digitalen Informationssignale, also der spezifischen Kennung und des Wertes für den zu überwachenden Parameter. Letzteres ist jedoch lediglich im normalen Überwachungsmodus zwingend erforderlich.

Die Auswerte- und Steuereinheit 5 führt eine Kollisionsüberwachung durch, welche für den Fall, dass mehrere Detektoreinheiten 7, 9, 11, 13 gleichzeitig senden, eine Auswertung unterbindet.

Um den Aufwand für eine bidirektionale Signalübertragung zwischen den Detektoreinheiten und der Auswerte- und Steuereinheit zu vermeiden, können die Detektoreinheiten so ausgebildet sein, dass sie ihre Signale in zufälligen zeitlichen Abständen senden, wobei selbstverständlich für den zeitlichen Abstand ein bestimmter Wertebereich vorgesehen sein kann. Auf diese Weise wird vermieden, dass zwei Detektoreinheiten über einen längeren Zeitraum immer zu den selben Zeiten gleichzeitig senden.

Das periodisch gesendete Signal (Telegramm) kann beispielsweise in einem vorgegebenen Abstand von einigen wenigen Sekunden gesendet werden und eine Telegrammdauer von einigen Hundert Millisekunden aufweisen. Das Telegramm kann aus mehreren Teilen bestehen, z.B. mehrere zeitlich kurze Teile, in denen tatsächlich ein Signal übertragen wird, welche jeweils durch eine Pause bestimmter zeitlicher Dauer getrennt sind.

Im normalen Betriebsfall kann die Auswerte- und Steuereinheit 5 alleine aus der spezifischen Kennung eines Empfangssignals eine Zuordnung des Wertes für den zu überwachenden Parameter zur Radposition treffen, da in einem zuvor durchgeführten Zuordnungsmodus die Zuordnung jeder spezifischen Kennung zu einer Radposition getroffen und gespeichert wurde.

Der Zuordnungsmodus kann bspw. dadurch aktiviert werden, dass jede der Detektoreinheiten 7, 9, 11, 13 einen Sensor (nicht dargestellt) umfasst, der auf Beschleunigungen reagiert, wobei die Detektoreinheiten in den Zuordnungsmodus schalten, wenn für eine bestimmte Zeitspanne keine Beschleunigung und damit keine Raddrehung detektiert wird. Im Zuordnungsmodus können die Signale in kürzeren Abständen ausgesandt werden, als dies im Normalbetrieb erforderlich ist. Hierdurch wird eine schnellere Durchführung des Zuordnungsprozesses ermöglicht. Die Signale müssen im Zuordnungsmodus nicht zwingend auch Informationen über einen Wert des zu überwachenden Parameters beinhalten. Vielmehr genügt in diesem Fall, wenn das Signal die spezifische Kennung der betreffenden Detektoreinheit 7, 9, 11, 13 beinhaltet.

An dieser Stelle sei erwähnt, dass die zeitliche Dauer eines Signals (gemeint ist hier die Dauer eines Telegrammteils, während dessen tatsächlich ein Signal übertragen wird) sowohl im Normalbetrieb als auch im Zuordnungsmodus klein gegenüber der zeitlichen Dauer ist, die ein Rad bei einer maximal zulässigen Geschwindigkeit für eine volle Umdrehung benötigt. Typischerweise beträgt die zeitliche Dauer eines Signals ca. 1 Millisekunde bis 100 Millisekunden, bspw. 10 Millisekunden. Diese kurze Signaldauer ermöglicht es, über die mittlere Signalleistung am Empfangsort der Auswerte- und Steuereinheit 5 die zugehörige Winkelstellung des betreffenden Rades zu charakterisieren, ohne dass durch die Rotation des Rades ein unerwünschter integrierender Effekt erzeugt wird.

Im Zuordnungsmodus erfasst die Auswerte- und Steuereinheit 5 die mittlere Signalleistung am Empfangsort, wobei hierzu die Empfangseinheit 23 ein Signal erzeugt, das ein Maß für die mittlere Signalleistung des empfangenen phasen- oder frequenzmodulierten Signals darstellt.

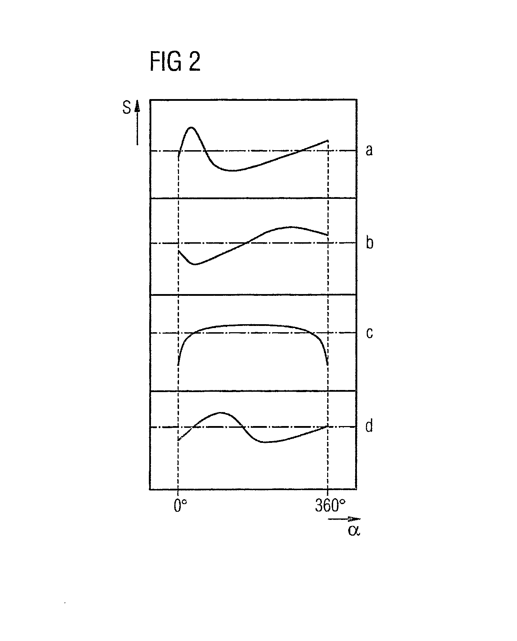

Fig. 2 zeigt ein fiktives Beispiel für die vier Signalverläufe der Empfangssignale der einzelnen Sendeeinheiten 7a, 9a, 11a, 13a abhängig von der Winkelposition der betreffenden Räder. Da im beschriebenen Ausführungsbeispiel immer nur ein kurzer Telegrammabschnitt des Signals bzw. dessen Mittelwert erfasst wird, ergäben sich die in Fig. 2 dargestellten Signalverläufe, wenn für jedes Empfangssignal eine Vielzahl von derart diskreten Werten erfasst und der Winkelposition zugeordnet würden.

Bei der gewünschten einfachen Auswertung soll jedoch möglichst der Rechen- und Speicheraufwand gering gehalten werden, so dass auch möglichst auf eine Erfassung der Winkel stellung der Räder verzichtet wird. Auch auf eine Speicherung der einzelnen diskreten Werte für die jeweiligen Empfangssignale soll nach Möglichkeit verzichtet werden.

Hierzu können die einzelnen diskreten Werte der Empfangssignale aufsummiert und gemittelt werden. Dabei steuert die Auswerte- und Steuereinheit den Erfassungsvorgang so, dass für jedes Empfangssignal eine Mindestanzahl von Werten, beispielsweise 64 Werte, erfasst werden. Es ist hierbei nicht erforderlich, dass für jedes Empfangssignal die selbe Anzahl von diskreten Werten erfasst wird.

Die so für jedes Empfangssignal bestimmten Mittelwerte (in Fig. 2 als Strichpunktlinien eingezeichnet) können dann für den Zuordnungsvorgang verwendet werden. Aus Gründen einer einfacheren und sicheren Lokalisierung (Zuordnung eines Empfangssignals zu einer Sendeeinheit bzw. deren örtlichen Position) wird im Folgenden nur eine Achsenlokalisierung vorgenommen. Dabei soll für ein bestimmtes Empfangssignal nur festgelegt werden, ob sich die betreffende Sendeeinheit an Radpositionen an der Vorder- oder Hinterachse des Fahrzeugs befindet. Da im Regelfall standardisierte Sendeeinheiten mit in etwa gleicher Sendeleistung verwendet werden, wird die Empfangsantenne der Empfangseinheit vorzugsweise unsymmetrisch im Fahrzeug angeordnet, beispielsweise, wie in Fig. 1 dargestellt, näher an der Vorderachse des Fahrzeugs 1. Die gemittelten diskreten Werte der Empfangssignale werden daher für die Sendeeinheiten 7a, 9a an den Radpositionen an der Vorderachse höher sein als die gemittelten diskreten Werte der Empfangssignale für die Sendeeinheiten 11a, 13a an den Radpositionen an der Hinterachse. Dies ist auch aus den fiktiven Signalverläufen in Fig. 2 ersichtlich. Für die Empfangssignale in den Fig. 2a und 2b für die Sendeeinheiten an den Radpositionen der Hinterachse ergeben sich niedrigere Mittelwerte als für die Sendeeinheiten and den Radpositionen der Vorderachse. Die Mittelwerte an den Radpositionen der selben Achse sind jedoch kaum zu unterscheiden.

Die Zuordnung, die im Zuordnungsmodus der Auswerte- und Steuereinheit (5) vorgenommen wird, kann in diesem einfachen Fall einer Achsenlokalisierung einfach dadurch erfolgen, dass die beiden Empfangssignale mit den höheren Mittelwerten der Vorderachse und die beiden Empfangssignale mit den niedrigeren Mittelwerten der Hinterachse zugeordnet werden. Die eigentliche Zuordnung erfolgt durch das Speichern des Identifikationscodes der Sendeeinheiten zur betreffenden Ortsinformation oder Ortsbereichsinformation (also beispielsweise "Vorderachse" oder "Hinterachse").

Auch die Unterschiede in den Mittelwerten unterschiedlicher Achsen können jedoch relativ gering sein, so dass überprüft werden soll, ob die so vorgenommene Zuordnung bzw. Lokalisierung mit ausreichender Sicherheit erfolgt ist.

Hierzu kann der minimale Abstand der Mittelwerte der Empfangssignale der beiden Sendeeinheiten an der Vorderachse von den Mittelwerten der Empfangssignale der beiden Sendeeinheiten an der Hinterachse bestimmt werden. Mit anderen Worten, es wird der niedrigste Mittelwert des betreffenden Empfangssignals einer Sendeeinheit an der Vorderachse mit dem höchsten Mittelwert des betreffenden Empfangssignals einer Sendeeinheit an der Hinterachse verglichen. Anstelle der Verwendung einer absoluten Betragsdifferenz der zu vergleichenden Werte empfiehlt sich das Verwenden eines Verhältnisses der beiden Werte, wobei die Sicherheit einer korrekten Lokalisierung mit dem Abstand des Quotienten von 1 steigt. Im Folgen den wird angenommen, dass der Quotient so gebildet wird, dass im Zähler der jeweils höhere Wert und im Nenner der jeweils niedrigere Wert steht, der Quotient also grundsätzlich größer als 1 ist. Das so ermittelte Verhältnis wird mit einem Sicherheitsschwellenwert verglichen wobei eine korrekte Zuordnung angenommen wird, wenn der Quotient größer ist als der Sicherheitschwellenwert. In diesem Fall wird der Lokalisierungsprozess beendet.

Liegt der Quotient unterhalb des Sicherheitsschwellenwertes so wird ein weiteres Kriterium für die Zuordnung verwendet.

Hierzu eignet sich beispielsweise die Anzahl der erfassten diskreten Werte für jedes der Empfangssignale die oberhalb eines vorgegebenen Entscheider-Schwellenwertes liegen. Diesen Entscheiderschwellenwert wird man vorzugsweise so wählen, dass er zwischen dem niedrigsten Mittelwert der Empfangssignale der Sendeeinheiten an der Vorderachse und dem größten Mittelwert der Empfangssignale der Sendeeinheiten an der Hinterachse liegt. Die optimale Lage des Entscheider-Schwellenwertes ist dabei abhängig vom fiktiven Verlauf der Empfangssignale als Funktion der Radstellung (vgl. Fig. 2). Als Startwert für den Entscheider-Schwellenwert kann ein vorgegebener fester Wert oder ein Wert mit einem vorgegebenen Abstand vom kleinsten Mittelwert der Empfangssignale der Sendeeinheiten an der Vorderachse gewählt werden. Der Abstand kann dabei als Absolutwert vorgegeben sein oder als Verhältnis in Bezug auf den betreffenden Mittelwert.

Der Entscheider-Schwellenwert kann auch bei jedem Lokalisationsprozess neu bestimmt werden. Der jeweils neue Entscheider-Schwellenwert kann jedoch für den Fall, dass die einzelnen erfassten, diskreten Mittelwerte nicht gespeichert werden, erst im nächsten Lokalisierungsprozess verwendet werden.

Hierdurch ergibt sich ein Verfahren, das sich selbsttätig an mögliche Änderungen von Parametern oder Umgebungsbedingungen anpasst. Insbesondere können so Einflüsse einer Drift der Sendeleistung kompensiert bzw. abgemildert werden.

Die Zuordnung bzw. Lokalisierung erfolgt dann wieder so, dass die beiden Empfangssignale, welche die meisten Werte oberhalb des Entscheider-Schwellenwerts liefern, bzw. die betreffenden Sendeeinheiten der Vorderachse zugeordnet werden und die beiden Empfangssignale, welche die wenigsten Werte oberhalb des Entscheider-Schwellenwerts liefern, bzw. die betreffenden Sendeeinheiten der Hinterachse. Anstelle der absoluten Anzahlen für die Werte oberhalb des Entscheider-Schwellenwerts können auch relative Häufigkeiten verwendet werden. Diese werden ermittelt, in dem die absoluten Anzahlen durch die Anzahl der für das betreffende Empfangssignal tatsächlich detektierten Werte dividiert werden.

Auch das Zuordnungsergebnis, das mit diesem weiteren Entscheidungskriterium ermittelt wird, kann hinsichtlich des Vorliegens einer ausreichenden Sicherheit mit einem geeigneten Sicherheitskriterium überprüft werden. Beispielsweise kann hierzu der Abstand der relativen Häufigkeiten der Empfangssignale überprüft werden, die die zweit- und drittgrößten Häufigkeiten aufweisen; Mit anderen Worten, es wird dasjenige Empfangssignal herangezogen, das nach dem betreffenden Zuordnungskriterium der Vorderachse zugeordnet ist und von den Empfangssignalen der Sendeeinheiten der Vorderachse den geringsten Häufigkeitswert aufweist, und dasjenige Empfangssignal, das nach dem betreffenden Zuordnungskriterium der Hinterachse zugeordnet ist und von den Empfangssignalen der Sendeeinheiten der Hinterachse den größten Häufigkeitswert aufweist. Der Abstand der relativen Häufigkeiten kann dabei wieder relativ, d.h. als Verhältnis, oder absolut ausgedrückt werden. Durch einen Vergleich des Abstands mit einem weiteren vorgegebenen Sicherheitsschwellenwert kann eine Aussage hinsichtlich einer ausreichenden oder nicht ausreichenden Sicherheit für die nach dem betreffenden Zuordnungskriterium vorgenommene Zuordnung getroffen werden.

Ergibt die Anwendung dieses weiteren Zuordnungskriteriums dieselbe Zuordnung wie das zuvor angewendete Zuordnungskriterium, und ergibt dieser Sicherheitstest eine positive Aussage, d.h. ist der Abstand größer als der Sicherheitsschwellenwert (für den Fall, dass die relativen Häufigkeiten durch die Bildung eines Verhältnisses verglichen werden, sei wieder ein Quotient größer als 1 angenommen), so wird der Zuordnungsprozess erfolgreich beendet.

Führt die Zuordnung zu einem anderen Ergebnis, wird das Verfahren erfolglos abgebrochen und erneut gestartet und/oder ein Fehlersignal oder eine Fehlermeldung erzeugt.

Für den Fall, dass die Zuordnung zum selben Ergebnis führt, der Sicherheitstest jedoch keine ausreichende Sicherheit signalisiert, wird nach dem hier erläuterten speziellen Ausführungsbeispiel noch ein drittes Zuordnungskriterium verwendet.

Hierzu wird während des Erfassens der diskreten Mittelwerte für die Empfangssignale jeweils das Maximum oder Minimum bestimmt. Auch dabei wird angenommen, dass die Empfangssignale von Sendeeinheiten an der Vorderachse jeweils größere Maxima bzw. kleinere Minima aufweisen als die Empfangssignale der Sendeeinheiten an der Hinterachse, und eine entsprechende Zuordnung vorgenommen.

Führt diese Zuordnung ebenfalls zum selben Ergebnis, wie die Anwendung der beiden zuvor erläuterten Zuordnungskriterien, so wird das Verfahren erfolgreich beendet, andernfalls erfolglos abgebrochen und neu gestartet und/oder ein Fehlersignal erzeugt.

Selbstverständlich kann jedoch auch für dieses Verfahren noch ein entsprechendes Sicherheitskriterium verwendet werden, beispielweise der Abstand der Maxima bzw. Minima, der analog zu den oben beschriebenen Verfahren bestimmt und mit einem Sicherheitsschwellenwert verglichen werden kann. Im Fall einer negativen Sicherheitsaussage könnte dann auch ein erfolgloser Abbruch des Verfahrens vorgenommen werden.

Damit ergibt sich insgesamt ein Verfahren und eine Einrichtung, die es ermöglichen, auf einfachste Weise und mit der erforderlichen Sicherheit eine Zuordnung bzw. Lokalisierung von Empfangssignalen bzw. entsprechenden Sendeeinheiten zu Ortspositionen oder -bereichen vorzunehmen.

## Patentansprüche

1. Verfahren zur Lokalisierung der Position wenigstens zweier Sendeeinheiten, insbesondere für das Überwachen mindestens eines Parameters für mehrere Fahrzeugräder eines KFZ,
(a) bei dem ein Teil N der Sendeeinheiten einer ersten Sendergruppe und der andere Teil M der Sendeeinheiten einer zweiten Sendergruppe zugeordnet ist und wobei jeder Sendergruppe ein örtlicher Bereich zugeordnet ist,
(b) bei dem die Sendesignale der Sendeeinheiten mittels einer Empfangsantenne einer Empfangseinheit einer Auswerte- und Steuereinheit (5) erfasst werden,
(c) wobei die Empfangssignale so beschaffen sind, dass die jeweils zeitlich über eine große Zeitspanne gemittelten Empfangsleistungen der Empfangssignale von Sendern der ersten Sendergruppe in jedem Fall hinreichend größer sind als die Empfangssignale von Sendern der zweiten Sendergruppe,
(d) bei dem die Empfangsleistungen der wenigstens zwei Empfangssignale über eine vorbestimmte Zeitspanne oder eine vorbestimmte Anzahl von diskret abgetasteten Werten der Empfangsleistung oder über eine vorbestimmte Anzahl von intermittierend gesendeten Signalen gemittelt werden,
(e) bei dem die N Empfangssignale, welche die N größten Mittelwerte aufweisen, bzw. die betreffenden Sen dereinheiten der ersten Sendergruppe und die M Empfangssignale, welche die M kleinsten Mittelwerte aufweisen, bzw. die betreffenden Sendereinheiten der zweiten Sendergruppe zugeordnet werden,
(f) bei dem das Empfangssignal der ersten Sendergruppe mit dem kleinsten Mittelwert und das Empfangssignal der zweiten Sendergruppe mit dem größten Mittelwert bestimmt und der Betrag der Differenz dieser Mittelwerte oder das Verhältnis dieser Mittelwerte mit einem vorgegebenen Sicherheitsschwellenwert verglichen wird,
(g) bei dem die Zuordnung der Empfangssignale bzw. der betreffenden Sendeeinheiten zur ersten oder zweiten Sendergruppe bzw. zu den diesen zugeordneten örtlichen Bereichen nur dann als korrekt erkannt wird, wenn die Betragsdifferenz oder das Verhältnis der Mittelwerte größer ist als der Sicherheitsschwellenwert, und
(h) bei dem für den Fall, dass die Betragsdifferenz oder das Verhältnis der Mittelwerte kleiner ist als der Sicherheitsschwellenwert, wenigstens ein weiteres Entscheidungskriterium zur Zuordnung der Empfangssignale bzw. den betreffenden Sendeeinheiten zu den Sendergruppen bzw. deren örtlichen Bereichen und/oder ein weiteres Kriterium zur Prüfung der Sicherheit der korrekten Zuordnung, vorzugsweise unter Verwendung weiterer charakteristischer Größen der Empfangssignale, verwendet wird.

2. Verfahren nach Anspruch 1, **dadurch gekennzeichnet, dass** das Endergebnis der Zuordnung nur dann als korrekt erkannt wird, wenn alle Zuordnungsergebnisse unter Verwendung des einen oder der mehreren weiteren Entscheidungskriterien mit dem ersten Zuordnungsergebnis übereinstimmen, ggf. auch dann, wenn das erste und auch alle weiteren Entscheidungskriterien zur Prüfung der Sicherheit einer korrekten Zuordnung ein negatives Ergebnis liefern.

3. Verfahren nach Anspruch 1 oder 2, **dadurch gekennzeichnet, dass** die Empfangssignale intermittierend abgetastet werden oder intermittierende Sendesignale verwendet werden und dass als weitere charakteristische Größe für die Empfangssignale die Anzahl der diskreten Empfangssignalwerte ermittelt wird, die größer bzw. kleiner ist als ein vorgegebener Entscheider-Schwellenwert, wobei vorzugsweise eine Mindestanzahl von diskreten Empfangssignalwerten für jedes Empfangssignal erfasst wird und für jedes Empfangssignal die relative Häufigkeit der oberhalb bzw. unterhalb des Schwellenwertes liegenden Empfangssignalwerte bestimmt wird.

4. Verfahren nach Anspruch 3, **dadurch gekennzeichnet, dass** als Test hinsichtlich der Sicherheit der Zuordnung unter Verwendung der ermittelten relativen Häufigkeitswerte die minimale Betragsdifferenz der relativen Häufigkeitswerte für alle Empfangssignale der ersten und zweiten Sendergruppe ermittelt und mit einem vorgegebenen weiteren Sicherheitsschwellenwert verglichen wird, wobei ein positives Testergebnis angenommen wird, wenn die minimale Betragsdifferenz größer ist als der weitere Sicherheitsschwellenwert und wobei ein negatives Testergebnis ange nommen wird, wenn die minimale Betragsdifferenz kleiner ist als der weitere Sicherheitsschwellenwert.

5. Verfahren nach Anspruch 4, **dadurch gekennzeichnet, dass** der Entscheider-Schwellenwert in Abhängigkeit von charakteristischen Parametern der betreffenden Empfangssignale bestimmt wird.

6. Verfahren nach Anspruch 5, **dadurch gekennzeichnet, dass** der Entscheider-Schwellenwert abhängig von den erfassten Mittelwerten des kleinsten Empfangssignals der ersten Sendergruppe und des größten Empfangssignals der zweiten Sendergruppe ermittelt wird, vorzugsweise als relativer Abstand von einem der Mittelwerte dieser beiden Empfangssignale oder als Verhältnis in Bezug auf einen der Mittelwerte dieser beiden Empfangssignale.

7. Verfahren nach Anspruch 5 oder 6, **dadurch gekennzeichnet, dass** in einem Ausgangszustand des Verfahrens für den Entscheider-Schwellenwert ein vorgegebener Startwert verwendet wird, und bei einem wiederholten Durchführen des Verfahrens, jeweils der im vorangegangenen Zuordnungsvorgang neu bestimmte Entscheider-Schwellenwert im darauffolgenden Verfahren verwendet wird.

8. Einrichtung zur Lokalisierung der Position wenigstens zweier Sendeeinheiten, insbesondere für das Überwachen mindestens eines Parameters für mehrere Fahrzeugräder eines KFZ,
(a) wobei ein Teil N der Sendeeinheiten einer ersten Sendergruppe und der andere Teil M der Sendeeinheiten einer zweiten Sendergruppe zugeordnet ist und wobei jeder Sendergruppe ein örtlicher Bereich zugeordnet ist,
(b) mit einer Auswerte- und Steuereinheit (5), welche eine Empfangseinheit mit einer Empfangsantenne zur Erfassung der Sendesignale der Sendeeinheiten umfasst,
(c) wobei die Empfangssignale, insbesondere durch eine geeignete Positionierung der Empfangsantenne, so beschaffen sind, dass die jeweils zeitlich über eine große Zeitspanne gemittelten Empfangsleistungen der Empfangssignale von Sendern der ersten Sendergruppe in jedem Fall hinreichend größer sind als die Empfangssignale von Sendern der zweiten Sendergruppe,
(d) wobei die Auswerte- und Steuereinheit jeweils die Empfangsleistungen der wenigstens zwei Empfangssignale über eine vorbestimmte Zeitspanne erfasst und mittelt oder eine jeweils vorbestimmte Anzahl von Werten der Empfangsleistung der Empfangssignale diskret abtastet und mittelt oder jeweils eine vorbestimmte Anzahl von intermittierend gesendeten Signalen erfasst und mittelt,
(e) wobei die Auswerte- und Steuereinheit (5) die N Empfangssignale, welche die N größten Mittelwerte aufweisen, bzw. die betreffenden Sendereinheiten der ersten Sendergruppe und die M Empfangssignale, welche die M kleinsten Mittelwerte aufweisen, bzw. die betreffenden Sendereinheiten der zweiten Sendergruppe zuordnet,
(f) wobei die Auswerte- und Steuereinheit das Empfangssignal der ersten Sendergruppe mit dem kleinsten Mittelwert und das Empfangssignal der zweiten Sendergruppe mit dem größten Mittelwert bestimmt und den Betrag der Differenz dieser Mittelwerte oder das Verhältnis dieser Mittelwerte mit einem vorgegebenen Sicherheitsschwellenwert vergleicht,
(g) wobei die Auswerte- und Steuereinheit (5) die Zuordnung der Empfangssignale bzw. der betreffenden Sendeeinheiten zur ersten oder zweiten Sendergruppe bzw. zu den diesen zugeordneten örtlichen Bereichen nur dann als korrekt erkennt, wenn die Betragsdifferenz oder das Verhältnis der Mittelwerte größer ist als der Sicherheitsschwellenwert, und
(h) wobei die Auswerte- und Steuereinheit (5) für den Fall, dass die Betragsdifferenz oder das Verhältnis der Mittelwerte kleiner ist als der Sicherheitsschwellenwert, wenigstens ein weiteres Entscheidungskriterium zur Zuordnung der Empfangssignale bzw. den betreffenden Sendeeinheiten zu den Sendergruppen bzw. deren örtlichen Bereichen und/oder ein weiteres Kriterium zur Prüfung der Sicherheit der korrekten Zuordnung, vorzugsweise unter Verwendung weiterer charakteristischer Größen der Empfangssignale, verwendet.

9. Einrichtung nach Anspruch 8, **dadurch gekennzeichnet, dass** die Auswerte- und Steuereinheit auch Verfahrensschritte nach einem der Ansprüche 1 bis 7 ausführt.

10. Einrichtung nach Anspruch 8 oder 9 für das Überwachen mindestens eines Parameters für mehrere Fahrzeugräder eines KFZ, **dadurch gekennzeichnet, dass** in einem KFZ an jeder Radposition eine Sendeeinheit angeordnet ist und dass die Sendeeinheiten an den Radpositionen der Hinterachse der ersten Sendergruppe und die Sendeeinheiten an den Radpositionen der Vorderachse der zweiten Sendergruppe zugeordnet sind.

## Claims

1. Method for localizing the position of at least two emission units, especially for monitoring at least one parameter for a plurality of wheels pertaining to a motor vehicle
(a) in which a part N of the emission units is allocated to a first transmitter group and the other part M of the emission units to a second transmitter group, with a local region being allocated to each transmitter group,
(b) in which the transmitted signals of the emission units are detected by means of a receiver antenna of the receiver unit of an evaluation and control unit (5),
(c) in which the reception signals are created in such a way that the reception power of the reception signals of emitters of the first transmitter group is in each case sufficiently higher than the reception signals of emitters of the second transmitter group detected over a long time span in each case,
(d) in which the reception power of at least two reception signals is averaged over a predetermined time span or a predetermined number of discretely scanned values of the reception power or over a predetermined number of intermittently transmitted signals,
(e) in which the N reception signals with the N highest average values or the relevant emission units are allocated to the first transmitter group, and the M reception signals with the M lowest average values or the relevant emission units are allocated to the second transmitter group,
(f) in which the reception signal of the first transmitter group is determined with the smallest average value and the reception signal of the second transmitter group with the highest average value and the difference in amount of these average values or the ratio of these average values is compared with a predetermined reliability threshold value,
(g) in which the allocation of the reception signals or the relevant emission units of the first or second transmitter groups or the local regions allocated to these is only deemed to be correct if the difference in amount or the ratio of the average values is greater than the reliability threshold value, and
(h) in which for the case that the difference in amount or the ratio of the average value is less than the reliability threshold value at least one additional decision criterion is used for allocating the reception signals or the relevant emission units to the transmitter groups or their local regions and/or an additional criterion for testing the reliability of the correct allocation preferably by using additional characteristic variables of the reception signals.

2. Method according to claim 1, **characterized in that** the end result of the allocation is only deemed to be correct if all the allocation results, by using the one decision criterion or a plurality of additional decision criteria correspond with the first allocation result, possibly even if the first and also all the additional decision criteria for testing the reliability of a correct allocation yield a negative result.

3. Method according to claim 1 or 2, **characterized in that** the reception signals are scanned intermittently or intermittently transmitted signals are used and that as an additional characteristic variable for the reception signals, the number of discrete reception signal values which are greater or less than a predetermined discriminator threshold value are determined, in which case preferably a minimum number of discrete reception signal values is detected for each reception signal and the relative frequency of the reception signal value above or below the threshold value is determined for each reception signal.

4. Method according to claim 3, **characterized in that** as a test with regard to the reliability of the allocation by using the determined relative frequency values, the minimum difference in amount of the relative frequency values is determined for all the reception signals of the first and second transmitter group and compared with a predetermined additional reliability threshold value, in which case a positive test result is assumed if the minimum difference in amount is greater than the additional reliability threshold value and in which case a negative test result is assumed if the minimal difference in amount is less than the additional reliability threshold value.

5. Method according to claim 4, **characterized in that** the discriminator threshold value is determined depending on the characteristic parameters of the relevant reception signals.

6. Method according to claim 5, **characterized in that** the discriminator threshold value is determined depending on the detected average values of the smallest reception signal of the first transmitter group and the largest reception signal of the second transmitter group preferably at a relative interval from one of the average values of these two reception signals or as a ratio with regard to one of the average values of these two reception signals.

7. Method according to claim 5 or 6, **characterized in that** in an initial state of the method for the discriminator threshold value, a predetermined starting value is used and in the case of a repeated implementation of the method the discriminator threshold value which has been determined anew in the preceding allocation process can then be used in subsequent methods in each case.

8. Device for localizing the position of at least two emission units, especially for monitoring at least one parameter for a plurality of wheels pertaining to a motor vehicle,
(a) in which a part N of the emission units is allocated to a first transmitter group and the other part M of the emission units to a second transmitter group in which case a local region is allocated to each transmitter group,
(b) in which the transmitted signals of the emission units are detected by means of a receiver antenna of the receiver unit of an evaluation and control unit (5),
(c) in which the reception signals, especially by means of a suitable positioning of the receiver antenna, are created in such a way that the reception power of the reception signals of emitters of the first transmitter group is in each case sufficiently higher than the reception signals of emitters of the second transmitter group detected over a long time span in each case,
(d) in which the evaluation and control unit in each case detects and averages the reception power of at least two reception signals over a predetermined time span or in each case discretely scans and averages a predetermined number of values of the reception power of the reception signals or in each case detects and averages a predetermined number of signals sent intermittently,
(e) in which the evaluation and control unit (5) allocates the N reception signals with the N highest average values or the relevant emission units to the first transmitter group, and the M reception signals with the M lowest average values or the relevant emission units to the second transmitter group,
(f) in which the evaluation and control unit determines the reception signal of the first transmitter group with the lowest average value and the reception signal of the second transmitter group with the highest average value and compares the difference in amount of these average values or the ratio of these average values with the predetermined reliability threshold value,
(g) in which the evaluation and control unit (5) only accepts the allocation of the reception signals or the relevant emission units to the first or the second transmitter group or to these locally allocated regions to be correct if the difference in amount or the ratio of the average values is greater than the reliability threshold value, and
(h) in which the evaluation and control unit (5) for the case that the difference in amount or the ratio of the average value is less than the reliability threshold value at least one additional decision criterion is used for allocating the reception signals or the relevant emission units to the transmitter groups or their local regions and/or an additional criterion for testing the reliability of the correct allocation preferably by using additional characteristic variables of the reception signals.

9. Device according to claim 8, **characterized in that** the evaluation and control unit also implements the procedural steps according to one of the claims 1 to 7.

10. Device according to claim 8 or 9 for monitoring at least one parameter for a plurality of wheels pertaining to a motor vehicle, **characterized in that** in a motor vehicle an emission unit is fitted in each wheel position, but on a wheel and the emission units in the wheel positions are allocated to the rear axle of the first transmitter group and the emission units in the wheel positions to the front axle of the second transmitter group.

## Revendications

1. Procédé pour la localisation d'au moins deux unités émettrices, en particulier pour la surveillance d'au moins un paramètre pour plusieurs roues d'un véhicule automobile,
(a) dans lequel une partie N des unités émettrices est attribuée à un premier groupe d'émetteurs et l'autre partie M des unités émettrices est attribuée à un deuxième groupe d'émetteurs, et dans lequel une région locale est attribuée à chaque groupe d'émetteurs,
(b) dans lequel les signaux d'émission des unités émettrices sont captés au moyen d'une antenne de réception d'une unité réceptrice appartenant à une unité d'analyse et de commande (5),
(c) dans lequel les signaux de réception sont configurés de manière que les puissances de réception des signaux de réception des émetteurs du premier groupe d'émetteurs, ramenées à chaque fois à leur moyenne prise sur un grand laps de temps, soient suffisamment supérieures dans chaque cas aux signaux de réception d'émetteurs du deuxième groupe d'émetteurs,
(d) dans lequel les puissances de réception des au moins deux signaux de réception sont ramenées à leur moyenne sur un laps de temps prédéterminé ou sur un nombre prédéterminé de valeurs captées discrètes de la puissance de réception, ou sur un nombre prédéterminé de signaux émis par intermittence,
(e) dans lequel les N signaux de réception qui présentent les N plus grandes valeurs moyennes, ou les unités émettrices correspondantes du premier groupe d'émetteurs et les M signaux de réception qui présentent les M plus petites valeurs moyennes, ou les unités émettrices correspondantes sont attribués au deuxième groupe d'émetteurs,
(f) dans lequel on détermine le signal de réception du premier groupe d'émetteurs qui possède la plus petite valeur moyenne et le signal de réception du deuxième groupe d'émetteurs qui possède la plus grande valeur moyenne et on compare la valeur de la différence entre ces valeurs moyennes, ou le rapport entre ces valeurs moyennes à un seuil de certitude prédéterminé,
(g) dans lequel l'attribution des signaux de réception ou des unités émettrices correspondantes au premier ou au deuxième groupe d'émetteurs, ou aux zones locales qui leur correspondent n'est reconnue correcte que si la différence entre les valeurs ou le rapport entre les valeurs moyennes est supérieur au seuil de certitude, et
(h) dans lequel, pour le cas où la différence entre les valeurs ou le rapport entre les valeurs moyennes est inférieur au seuil de certitude, on utilise au moins un critère de décision supplémentaire pour attribuer les signaux de réception ou les unités émettrices correspondantes aux groupes d'émetteurs ou aux zones locales de ces groupes et/ou un critère supplémentaire pour vérifier le degré de certitude de la correction de l'attribution, de préférence avec utilisation de grandeurs caractéristiques supplémentaires des signaux de réception.

2. Procédé selon la revendication 1, **caractérisé en ce que** le résultat final de l'attribution est seulement reconnu correct si tous les résultats d'attribution, avec utilisation d'un ou de plusieurs critères de décision supplémentaires concordent avec le premier résultat d'attribution, éventuellement même si le premier critère de décision et aussi tous les critères de décision supplémentaires pour la vérification de la certitude d'une attribution correcte donnent un résultat négatif.

3. Procédé selon la revendication 1 ou 2, **caractérisé en ce que** les signaux de réception sont palpés par intermittence ou bien qu'on utilise des signaux d'émission intermittents et **en ce qu'**on détermine comme grandeur caractéristique supplémentaire pour les signaux de réception, le nombre des valeurs discrètes de signaux de réception, qui est supérieur ou inférieur à un seuil de décision prédéterminé, auquel cas on capte de préférence un nombre minimum de valeurs discrètes de signaux de réception pour chaque signal de réception, et, pour chaque signal de réception, on détermine la fréquence relative des valeurs des signaux de réception qui se trouvent au-dessus ou au-dessous du seuil.

4. Procédé selon la revendication 3, **caractérisé en ce que**, comme test pour la certitude de l'attribution avec utilisation des valeurs de fréquences relatives obtenues, on détermine la différence minimale de valeur des fréquences relatives pour tous les signaux de réception du premier groupe d'émetteurs et du deuxième groupe d'émetteurs et on la compare à un seuil de certitude supplémentaire prédéterminé, auquel cas on suppose un résultat de test positif lorsque la différence minimale de valeurs est supérieure au seuil de certitude supplémentaire, cependant qu'on suppose un résultat de test négatif lorsque la différence minimale des valeurs est inférieure au seuil de certitude supplémentaire.

5. Procédé selon la revendication 4, **caractérisé en ce que** le seuil de décision est déterminé en fonction de paramètres caractéristiques des signaux de réception considérés.

6. Procédé selon la revendication 5, **caractérisé en ce que** le seuil de décision est déterminé en fonction des valeurs moyennes obtenues du plus petit signal de réception du premier groupe d'émetteurs et du plus grand signal de réception du deuxième groupe d'émetteurs, de préférence sous la forme d'un écart relatif par rapport à une des valeurs moyennes de ces deux signaux de réception ou sous la forme du rapport à une des valeurs moyennes de ces deux signaux de réception.

7. Procédé selon la revendication 5 ou 6, **caractérisé en ce que**, dans un état de départ du procédé, on utilise pour le seuil de décision une valeur de départ prédéterminée et que, lors d'une répétition de l'exécution du procédé, on utilise dans le processus suivant à chaque fois, le seuil de décision déterminé dans le processus d'attribution précédent.

8. Dispositif pour la localisation de la position d'au moins deux unités émettrices, en particulier pour la surveillance d'au moins un paramètre pour plusieurs roues d'un véhicule automobile,
(a) dans lequel une partie N des unités émettrices est attribuée à un premier groupe d'émetteurs et l'autre partie M des unités émettrices est attribuée à un deuxième groupe d'émetteurs, et dans lequel une zone locale est attribuée à chaque groupe d'émetteurs
(b) comprenant une unité d'analyse et de commande (5) qui comprend une unité de réception possédant une antenne de réception pour capter les signaux d'émission des unités émettrices,
(c) les signaux de réception, sont configurés, en particulier par un positionnement approprié de l'antenne de réception, de telle manière que la valeur moyenne des signaux de réception d'émetteurs du premier groupe d'émetteurs, prise à chaque fois dans le temps sur un grand laps de temps, soit dans chaque cas suffisamment supérieure aux signaux de réception d'émetteurs du deuxième groupe d'émetteurs,
(d) l'unité d'analyse et de commande capte les puissances de réception des au moins deux signaux de réception sur un laps de temps prédéterminé et les ramène à une valeur moyenne, ou encore palpe de façon discrète, un nombre prédéterminé à chaque fois, de signaux émis par intermittence et les ramène à une valeur moyenne,
(e) l'unité d'analyse et de commande (5) attribue les N signaux de réception qui présentent les N plus grandes valeurs moyennes, ou les unités émettrices correspondantes du premier groupe d'émetteurs, et les M signaux de réception qui présentent les M plus petites valeurs moyennes, ou les unités émettrices correspondantes au deuxième groupe d'émetteurs,
(f) l'unité d'analyse et de commande détermine le signal de réception du premier groupe d'émetteurs qui possède la plus petite valeur moyenne et le signal de réception du deuxième groupe d'émetteurs qui possède la plus grande valeur moyenne, et compare la valeur de la différence de ces valeurs moyennes ou le rapport de ces valeurs moyennes à un seuil de certitude prédéterminé,
(g) l'unité d'analyse et de commande (5) reconnaît comme correcte l'attribution des signaux de réception, ou des unités émettrices correspondantes au premier ou au deuxième groupes d'émetteurs, ou aux zones locales qui leur correspondent seulement lorsque la différence de valeur, ou le rapport des valeurs moyennes est supérieure au seuil de certitude, et
(h) pour le cas où la différence de valeur, ou bien le rapport des valeurs moyennes, est plus petit que le seuil de certitude, l'unité d'analyse et de commande (5) utilise un critère supplémentaire de décision pour l'attribution des signaux de réception ou des unités émettrices correspondantes aux groupes d'émetteurs, ou aux zones locales de ces groupes et/ou un critère supplémentaire pour le contrôle de la certitude de l'attribution correcte, de préférence en utilisant des grandeurs caractéristiques supplémentaires du signal de réception.

9. Dispositif selon la revendication 8, **caractérisé en ce que** l'unité d'analyse et de commande exécute aussi des étapes de procédé selon une des revendications 1 à 7.

10. Dispositif selon la revendication 8 ou 9 pour la surveillance d'au moins un paramètre pour plusieurs roues d'un véhicule, **caractérisé en ce que**, dans un véhicule, une unité émettrice est disposée au niveau de chaque position de roue et **en ce que** les unités émettrices situées aux positions de roues de l'essieu arrière sont attribuées au premier groupe d'émetteurs et les unités émettrices situées au niveau des positions de roues de l'essieu avant sont attribuées au deuxième groupe d'émetteurs.
